# EUROPÄISCHE PATENTSCHRIFT

(11) **EP 2 676 902 B1**
(45) Veröffentlichungstag und Bekanntmachung des Hinweises auf die Patenterteilung: **11.02.2015**
(21) Anmeldenummer: 13004546.1
(22) Anmeldetag: 31.05.2012
(51) Int. Cl.: B65G 13/071, B65G 13/08, B65G 39/12, B65G 39/02, B65G 47/16, B65G 47/252, B65G 43/00, B65G 65/02, B65G 65/23, B65G 43/08, B65G 37/00

(54) **Kurvenrollenförderer mit Förderstreckenlagerelement**
Curve roller conveyor with conveyor section bearing element
Courbe convoyeur à rouleaux avec élément de palier pour voie de transport

(30) Priorität: 14.06.2011 DE 102011104190
(43) Veröffentlichungstag der Anmeldung: 25.12.2013
(62) Teilanmeldung aus: 12728971.8
(73) Patentinhaber: Interroll Holding AG, 6592 Sant' Antonino (CH)
(72) Erfinder: Wolters, Thomas, 41366 Schwalmtal (DE); Dudek, Siegmund, 52525 Heinsberg (DE)
(74) Vertreter: Müller-Boré & Partner Patentanwälte PartG mbB

(56) Entgegenhaltungen:
- EP-A1- 0 506 994
- FR-A1- 2 799 452
- US-A- 4 091 916
- US-A- 4 488 639
- US-A- 5 209 342

## Beschreibung

Die vorliegende Erfindung betrifft eine neue Konstruktion von angetriebenen Rollenbahnen und deren Komponenten.

### Hintergrund der Erfindung und Stand der Technik

Rollenbahnen sind dank vieler Varianten die ideale Transportmöglichkeit für unterschiedliche Güter.

Rollenförderer werden unter anderem auch eingesetzt, um Bandförderer auf gerader Strecke oder in Kurven miteinander zu verbinden. Hier werden oft Puffer benötigt, die unterschiedliche Taktzyklen von Maschinen kompensieren können. Dabei werden z.T. Stauförderer eingesetzt, mit denen eine Staufunktion erreicht werden kann, die insbesondere bei der Maschinenverkettung sinnvoll ist.

Rollenbahnen können unter anderem als Leicht-Rollenbahnen oder als Standardrollenförderer eingesetzt werden.

Leicht-Rollenbahnen, die auch als Kleinstrollenförderer bezeichnet werden, dienen dem Transport von kleinen, leichten Fördergütern, insbesondere über kurze Strecken. Im Allgemeinen werden mit Leicht-Rollenbahnen Stückgüter von maximal 15 kg je Meter bei einer Fördergeschwindigkeit von ca. 1 m/s transportiert. Ein Leichtrollenförderer mit 2 Meter Länge kann beispielsweise aus 57 Rollen mit einem Durchmesser von je 30 mm (30er Rolle) und einer Rollenteilung von 35 mm bestehen, so dass auch kleine Transportgüter sicher transportiert werden können und nicht in der Rollenbahn verhaken.

Standardrollenförderer führen Rollen mit 50 mm Durchmesser (50er Rolle) und einer Rollenteilung von ca. 75 mm und mehr. Die Rollen sind je aus Kunststoff oder Metall. Rollenförderer sind stationäre Anlagen in der Fördertechnik, die Stückgut über eine Anordnung von Rollen bewegen.

Für angetriebene Rollenbahnen existieren unterschiedliche Antriebskonzepte.

Bei Geradförderern werden z.B. Ketten bei höheren Antriebsmomenten und niedrigen Geschwindigkeiten verwendet, wohingegen bei mittleren Momenten Keilrippenriemen und bei niedrigen Momenten Rundriemen eingesetzt werden. Zum Teil kommen auch Flachriemen zum Einsatz. Die Anordnung des Riemens kann dabei tangential zu den angetriebenen Rollen oder umschlingend zu den angetriebenen Rollen sein. Im letzteren Fall kann z.B. ein Antrieb von Rolle auf Rolle oder ein Antrieb durch eine Königswelle erfolgen.

Bei tangentialem Antrieb berührt der Riemen die Rollen tangential. Dabei wird der Riemen entweder mit Stützrollen oder mittels Gleitschiene gestützt, so dass es zur erforderlichen Normalkraft zwischen Förderrolle und dem Riemen kommt. Je nach verwendetem Riemen und zu übertragendem Moment, ist eine mehr oder weniger große Vorspannung des Riemens erforderlich.

Insbesondere im Fall des Tangentialantriebs müssen die Riemen entweder vor Ort auf die benötigte Länge gekürzt und zusammengeschweißt werden oder es müssen zusätzliche Umlenkrollen und aufwändige Spannvorrichtungen eingesetzt werden, wenn vorgefertigte Antriebsriemen mit einer vorgegebenen Länge verwendet werden sollen. Dabei ist zu berücksichtigen, dass nur wenige Zugmittel überhaupt auf die gewünschte Länge kürzbar sind und dass die Qualität der Schweißung vor Ort nur schwer sichergestellt werden kann.

Für eine gezielte Wirkung muss das Transmissionselement stets stark gespannt sein und regelmäßig nachgespannt werden. Eine zu geringe Spannung kann zu starken Trumschwingungen oder zum Überspringen der Zähne an den Zahnscheiben führen. Zu hohe Kräfte verursachen eine starke Belastung der Lager und des Riemens und beeinflussen die Getriebekomponenten durch Verschleißerscheinungen negativ. Außerdem führen hohe Kräfte, eine hohe Steifigkeit der Riemen, eine Vielzahl von Riemenumlenkungen und/oder der Einsatz von Gleitschienen zu starker Verlustreibung, zu Verschleiß und zu unnützem Energieverlust.

Bei dem Antrieb von Rolle auf Rolle treibt eine Rolle, die mit einem Antriebsmotor verbunden ist, mittels Transmissionselement zumeist kraftschlüssig die darauffolgende Rolle an. Ein weiteres Transmissionselement kann die nächste darauffolgende Rolle antreiben, etc. Dabei umschlingen die Transmissionselemente jeweils die halbe Rolle.

Bei einer großen Anzahl von Rollen sind viele Transmissionselemente erforderlich, so dass Reibung und somit Energieverbrauch und Verschleiß zunehmen. Bei einem 2m langen Rollenförderer mit 30mm Rollen sind ca. 60 Riemen erforderlich. Hier macht sich auch der Drehzahlverlust negativ bemerkbar, da aufgrund des Schlupfes bei jeder Übertragung von Riemen auf Rolle die letzte Rolle eine deutlich unterschiedliche Rotationsgeschwindigkeit aufweisen kann als die erste angetriebene Rolle. Um diese Nachteile zu vermeiden werden zum Teil motorisierte Rollen eingesetzt. Diese motorisierte Rollen werden über die Rollbahnstrecke integriert, so dass eine motorisierte Rolle über Rundriemen zusammenhängend z.B. jeweils vier Rollen vor und nach der motorisierten Rolle antreiben.

Bei einem Antrieb durch eine Königswelle sind ebenfalls viele Umschlingungen des Transmissionselements erforderlich, was zu entsprechenden Reibungsverlusten führt. Außerdem ist die Montage des Transmissionselements aufwändig.

Bei angetriebenen Rollenbahnen, insbesondere bei den Leicht-Rollenbahnen, bei denen alle oder zumindest ein Großteil der Rollen angetrieben sein sollen, stellt sich daher das Problem, dass eine Vielzahl von angetriebenen Rollen, mit eigener Antriebseinheit, nur aufwändig und teuer zu verwirklichen sind. Angetriebene Rollenbahnen, bei denen eine Vielzahl von Rollen über eine Antriebseinheit angetrieben werden, bedürfen einer verhältnismäßig starken Antriebseinheit, weil die Kraftübertragung von der Antriebseinheit reibungsbehaftet und daher mit einem hohen Energieverbrauch verbunden ist. Zudem führt ein reibungsbehafteter Betrieb häufig zu Verschleiß und vorzeitigem Ausfall von Komponenten der Rollenbahnen.

Die genannten Probleme treten sowohl bei Geradförderern als auch bei Kurvenförderern auf, wobei sich Kurvenförderer eher als noch problematischer erweisen, weil ein Antrieb entlang einer Kurve eine entsprechende Umlenkung des Transmissionselements oder der Transmissionselemente bedarf, was zu mehr Reibungsverlusten und Verschleiß führen kann.

Die Druckschrift US 4 091 916 offenbart einen Kurvenrollenförderer gemäß dem Oberbegriff des Anspruchs 1, mit einer Vorrichtung zum Antreiben von Förderrollen einer Förderrollenbahn mit einer Klammer, welche an ihrem oberen Ende schwenkbar an einem Förderrollenbahnrahmen befestigt ist und an ihrem unteren Ende eine Einstellschraube zum Einstellen der Auslenkung aufweist. Eine Laufrolle, die einen Antriebsriemen führt, ist an der Klammer befestigt und kann durch ein Betätigen der Einstellschraube derart positioniert werden, daß die Laufrolle den Antriebsriemen gegen eine Förderrolle der Förderrollenbahn preßt.

Die Druckschrift EP 0 506 994 A1 offenbart einen Riemenantrieb für eine Förderrollenbahn, wobei jede Andruckrolle einen zylindrischen Grundkörper sowie zumindest eine sich daran anschließende, sich ringförmig um den Umfang des zylindrischen Grundkörpers erstreckende und schräg zur Achse der Andruckrolle hin verlaufende Riemenandruckscheibe aufweist, wobei in Richtung der Förderrollenbahn gesehen, die Riemenandruckscheibe bei den aufeinanderfolgenden Andruckrollen abwechselnd rechts- und linksseitig an den Andruckrollen angeordnet ist. Durch das Auflaufen des Riemens auf der schräg ausgebildeten Riemenandruckscheibe wird die feste Anlage des Antriebsriemens an den Förderrollen sichergestellt.

### Aufgabe

Es ist daher Aufgabe der Erfindung, einen einfach zu montierenden Rollenförderer bereitzustellen, der einfach zu montieren, vielseitig einsetzbar und zuverlässig ist und im Betrieb wenig Energie verbraucht.

### Lösung der Aufgabe

Die Aufgabe wird durch den Gegenstand des unabhängigen Anspruchs 1 gelöst.

Ein erster Aspekt zur Lösung der Aufgabe betrifft einen Kurvenrollenförderer mit einem Förderrahmen und einer Mehrzahl von Förderrollen, die an dem Förderrahmen drehbar gelagert sind, wobei der Kurvenrollenförderer ein Antriebssystem mit einem Antriebsriemen mit einem runden Querschnitt aufweist, wobei mehrere Förderrollen schwimmend auf dem Antriebsriemen aufliegen, wobei der Förderrahmen des Kurvenrollenförderers ein entlang einer Kreislinie verlaufendes Innenprofil und eine Vielzahl von an dem Innenprofil befestigten Förderstreckenlagerelementen aufweist, die jeweils zur Bildung einer Lagerstelle ein Langloch aufweisen, in dem ein Achsende der Förderrolle aufgenommen ist.

Der Antriebsriemen mit dem runden Querschnitt kann auch als Rundriemen bezeichnet werden. Der Querschnitt des Antriebsriemens kann kreisrund sein. Der Antriebsriemen kann als PU-Rundriemen ausgebildet sein. Ein PU-Rundriemen kann unter Verwendung von Polyurethan (PU) hergestellt werden. Der Begriff "schwimmend aufliegen" bedeutet, dass die Förderrolle auf dem Antriebsriemen so aufliegt, dass der Antriebsriemen die Förderrolle lediglich tangential von unten her berührt. Der Begriff Kurvenrollenförderer bezeichnet einen Rollenförderer, der Fördergüter entlang einer Kurve, insbesondere entlang eines Kreissegments, fördert. Der Förderrahmen des Kurvenrollenförderers kann ein kreisförmig gebogenes Innenprofil aufweisen, an dem die Förderrollen kurveninnenseitig gelagert sind, wobei die Drehachsen der Förderrollen mit den Radiusvektoren zusammenfallen, die vom Kreismittelpunkt des dem kreisförmig gebogenen Innenprofil zugehörigen Kreises ausgehen. Der Förderrahmen des Kurvenrollenförderers kann ferner ein kreisförmig gebogenes Außenprofil aufweisen, an dem die Förderrollen kurvenaußenseitig gelagert sind. Innenprofil und Außenprofil können den gleichen Kreismittelpunkt aufweisen. Das Kreissegment kann z.B. ein 30° - Segment, ein 45° - Segment, ein 60° Segment oder ein 90° - Segment sein. Auch andere Winkelbereiche sind denkbar. Der Bereich des Antriebsriemens auf dem die Förderrollen aufliegen kann als Obertrum oder als Lasttrum bezeichnet werden.

Bei einer Ausführungsform des vorstehend beschriebenen Kurvenrollenförderers kann der Antriebsriemen auf der den Förderrollen abgewandten Seite auf einer Vielzahl von Tragrollen aufliegen, wobei der Antriebsriemen kurveninnenseitig durch eine Vielzahl von Stützrollen abgestützt wird, so dass der Antriebsriemen kurveninnenseitig entlang einer der Förderkurve folgenden Polygonkurve verläuft.

Die den Förderrollen abgewandte Seite bezeichnet die untere Seite des Obertrums. Die Tragrollen können eine im Wesentlichen waagrechte Rotationsachse aufweisen. Im Wesentlichen waagrecht umfasst auch die Lagerung der Tragrollen, bei der die Rotationsachse der Tragrollen parallel zur Rotationsachse der Förderrolle oder parallel zu einer Tangentialebene verläuft welche die Rollenoberfläche tangiert. Dabei können die Rotationsachsen der Tragrollen jeweils in einer Ebene liegen, die im jeweiligen Berührungspunkt zwischen Tragrolle und Antriebsriemen senkrecht auf den Antriebsriemen steht.

Bei einem weiteren Kurvenrollenförderer gemäß einer weiteren Ausführungsform eines der vorstehend beschriebenen Kurvenrollenförderer kann das Verhältnis zwischen der Anzahl der angetriebenen Förderrollen F und der Anzahl der Stützrollen S der Beziehung 0,5 ≤ F/S ≤ 4 entsprechen.

Je kleiner das Verhältnis gewählt ist desto feiner ist die Polygonkurve, entlang dem der Antriebsriemen verläuft, abgestuft. Dies gewährleistet, dass sich der Antriebsriemenverlauf im Bereich des Berührpunktes mit der Oberfläche der Förderrolle näher an den idealen, reibungsärmsten und somit verschleißärmsten Antriebsriemenverlauf annähert. Der reibungsärmste Antriebsriemenverlauf entspricht im Berührpunkt einer Tangente an die Oberfläche der Förderrollenoberfläche, die senkrecht auf die Förderrollenachse steht. Da die Förderrollenoberfläche einer Förderrolle eines Kurvenförderers in der Regel als Konus ausgebildet ist, würde eine solche Tangente in einer Ebene verlaufen, die senkrecht auf die Rotationsachse des Konus steht und dabei den kreisförmigen Querschnitt des Konus berührt. Ein solcher idealer Verlauf kann z.B. erreicht werden, wenn jeweils eine Stützrolle auf einer Kreislinie mit dem Mittelpunkt des Krümmungskreises der Förderkurve und mittig zwischen zwei Förderrollen angeordnet ist. Auch für die Anordnung der Stützrollen im Verhältnis zu den Tragrollen gilt, dass der reibungsärmste Antriebsriemenverlauf einer Tangente entspricht, die senkrecht auf die Tragrollenachse steht. Wenn eine Tragrolle direkt unterhalb einer Stützrolle liegt, wird dieser ideale Verlauf nicht ganz erreicht. Jedoch hat sich gezeigt, dass bei einer solchen Ausführungsform der Antriebsriemen stabiler in seiner Position verläuft und weniger dazu neigt aus seiner geführten Position auszubrechen, so dass ein störungsärmerer Betrieb gewährleistet werden kann. Ferner hat sich gezeigt dass ein Verhältnis von F/S = 2 eine ausreichend fein abgestufte Polygonkurve ergibt.

Bei einer weiteren Ausführungsform eines der vorstehen beschriebenen Kurvenrollenförderer können die Rotationsachsen der Stützrollen jeweils einen senkrechten oder in Richtung der Kurvenaußenseite geneigten Verlauf aufweisen.

Ein senkrechter Verlauf der Rotationsachsen der Stützrollen bedeutet, dass die Rotationsachsen der Stützrollen senkrecht zur Förderebene stehen und parallel zueinander verlaufen. Bei zylindrischen Rollen führt dies dazu, dass aus der Andruckkraft des Antriebsriemens auf der Stützrolle keine Kraftkomponenten resultieren, die quer zum Verlauf des Antriebsriemens gerichtet sind. So wird das Risiko eines Abrutschens des Antriebsriemens und somit eine Unterbrechung des Betriebs des Rollenförderers verhindert. Es hat sich gezeigt, dass es in diesem Fall ausreicht, den Rundriemen lediglich über das Gewicht der Förderrollen nieder zu halten, die auf ihm schwimmend aufliegen. Ein in Richtung der Kurvenaußenseite geneigter Verlauf bezeichnet einen Verlauf bei dem das obere Ende der Rotationsachse, also das förderrollenseitige Ende, in Richtung der Außenseite der Förderkurve geneigt ist. Bei einer zylindrischen Stützrolle wird so eine Kraftkomponente der Andruckkraft zwischen Antriebsriemen und Stützrolle erzeugt, die den Antriebsriemen nach unten auf die Tragrollen drückt, so dass auch bei dieser Ausführungsform ein Abrutschen des Antriebsriemens verhindert wird. Da der Antriebsriemen die Stützrollen nicht lediglich tangiert sondern um einen, wenn auch geringen Winkel umschlingt, führt eine Neigung der Stützrollen in Richtung der Kurvenaußenseite dazu, dass zwischen Antriebsriemen und Stützrolle eine geringfügige Relativbewegung und somit Reibung und Verschleiß auftreten kann. Je geringer die Neigung der Rotationsachse der Stützrolle ist, desto geringer ist die auftretende Relativbewegung. Eine Neigung zwischen 0° und 5°, insbesondere zwischen 0° und 2° hat sich mit Blick auf Reibung und Verschleiß als unproblematisch erwiesen. Alternativ oder zusätzlich zu der entsprechenden Neigung der Rollenachsen der Stützrollen, können die Oberflächen der Stützrollen kegelförmig gestaltet sein, so dass das Risiko eines Abrutschens des Antriebsriemens verringert wird.

Bei noch einer weiteren Ausführungsform eines der vorstehend beschriebenen Kurvenrollenförderer können die Stützrollen und/oder die Tragrollen als Rollen mit kreiszylindrischen oder kreiskegelförmigen Oberflächen ausgeführt sein.

Diese Oberflächengeometrie bewirkt, dass die Berührung zwischen dem Antriebsriemen und den Tragrollen bzw. die Berührung zwischen dem Antriebsriemen und den Stützrollen in einer Richtung quer zum Verlauf des Antriebsriemens jeweils nur an einem Punkt der jeweiligen Rollenoberfläche erfolgt, wenn man eine Verformung des Antriebsriemens oder der Rollen aufgrund der Flächenpressung vernachlässigt. Da so mehrere Berührungspunkte des Antriebsriemens mit einer der Rollen vermieden werden, können auch Berührungspunkte mit unterschiedlichen Relativgeschwindigkeiten vermieden werden. Auf diese Art und Weise kann Reibung und Verschleiß von Rollen und Antriebsriemen verringert werden. Die Stützrollen und/oder die Tragrollen können ferner als bordlose Rollen ausgeführt sein. Ein Bord ist ein Vorsprung an der Stirnseite einer Rolle, der ein Abrutschen des Antriebsriemens von der Rolle verhindern soll. Auch bei einer Berührung des Antriebsriemens am Bord einer Rolle kann es zu einer unterschiedlichen Relativgeschwindigkeit und somit zu Reibung und Verschleiß kommen. Diese Nachteile können bei einer bordlosen Rolle vermieden werden.

Eine weitere Ausführungsform betrifft einen Kurvenrollenförderer, wobei der Kurvenrollenförderer ferner zumindest eine Umlenkrolle mit konkaver Auflagefläche aufweist.

Eine Umlenkrolle in diesem Sinn bezeichnet eine Rolle, die in Förderrichtung an vorderster oder hinterster Stelle des Obertrums angeordnet ist, und die das Obertrum nach unten hin bzw. von unten kommend in Richtung Untertrum umlenkt.

Gemäß einer weiteren Ausführungsform eines solchen Kurvenrollenförderers kann der Kurvenrollenförderer ferner eine zweite Umlenkrolle aufweisen, die als Antriebsrolle ausgebildet ist.

Die Rotationsachse der Antriebsrolle kann parallel zum Radius verlaufen, der sich vom Kurvenmittelpunkt zum Mittelpunkt der Antriebsrolle erstreckt. Die Antriebsrolle kann mit einem Elektromotor verbunden sein, der in axialer Richtung an der Antriebsrolle mit der Antriebsrolle verbunden ist. Die Antriebsrolle kann z.B. als angetrieben Förderrolle ausgebildet sein. Eine angetriebene Förderrolle bezeichnet eine Förderrolle, bei der ein Elektromotor im Inneren des zylindrischen Rollenmantels angeordnet ist und den Rollenmantel antreibt. Diese Art von angetriebenen Förderrollen, hat einen geringen Durchmesser und daher in radialer Richtung einen geringen Platzbedarf. Außerdem werden angetriebene Förderrollen in großen Stückzahlen hergestellt, so dass diese Antriebe günstig erhältlich sind.

Ein Kurvenrollenförderer gemäß einer weiteren Ausführungsform weist ferner eine Untertrumumlenkrolle auf, welche derart angeordnet ist, dass ein erster Teil des Untertrums, der von der ersten Umlenkrolle kommend zur Untertrumumlenkrolle führt, entlang einer Geraden verläuft, die in einer Ebene liegt, die senkrecht zur Rotationsachse der ersten Umlenkrolle steht und durch den Antriebsriemen im Bereich der ersten Umlenkrolle verläuft.

Bei einem solchen Kurvenrollenförderer kann lediglich eine einzige Untertrumumlenkrolle vorgesehen sein. Diese einzige Untertrumumlenkrolle kann in Bezug auf die zweite Umlenkrolle derart angeordnet sein, dass ein zweiter Teil des Untertrums, der von der zweiten Umlenkrolle kommend zur Untertrumumlenkrolle führt, entlang einer Geraden verläuft, die in einer Ebene liegt, die senkrecht zur Rotationsachse der zweiten Umlenkrolle steht und durch den Antriebsriemen im Bereich der zweiten Umlenkrolle verläuft. Die Rotationsachse der Untertrumumlenkrolle kann senkrecht zur Förderebene stehen.

Bei einer weiteren Ausführungsform eines der vorstehend beschriebenen Kurvenrollenförderer kann der Kurvenrollenförderer eine erste und eine zweite antriebslose Umlenkrolle aufweisen, sowie eine im Bereich des Untertrums angeordnete Antriebsrolle.

Die im Bereich des Untertrums angeordnete Antriebsrolle kann eine im Wesentlichen senkrechte Rotationsachse oder im Verhältnis zur Förderebene um mehr als 5°schräg stehende Rotationsachse aufweisen. Diese Ausführungsform hat, insbesondere bei einer senkrecht stehenden Rotationsachse, den Vorteil, dass die Antriebsrolle quer zur Förderebene nur einen geringen Platzbedarf aufweist. So können besonders schmale Rollenförderer verwirklicht werden.

Ein solcher Kurvenrollenförderer kann gemäß einer weiteren Ausführungsform zumindest eine Untertrumumlenkrolle aufweisen, die im Bereich des Untertrums derart angeordnet ist, dass das Untertrum die Antriebsrolle um zumindest 180° umschlingt.

Dabei kann eine einzige Untertrumumlenkrolle ausreichend sein. Diese einzige Untertrumumlenkrolle kann in Bezug auf die erste Umlenkrolle derart angeordnet sein, dass ein Teil des Untertrums, der von der ersten Umlenkrolle kommend zur Untertrumumlenkrolle führt, entlang einer Geraden verläuft, die in einer Ebene liegt, die senkrecht zur Rotationsachse der Umlenkrolle steht und durch den Antriebsriemen im Bereich der ersten Umlenkrolle verläuft. In dem Fall kann die Antriebsrolle derart angeordnet sein, dass ein zweiter Teil des Untertrums, der von der zweiten Umlenkrolle kommend zur Antriebsrolle führt, entlang einer Geraden verläuft, die in einer Ebene liegt, die senkrecht zur Rotationsachse der zweiten Umlenkrolle steht und durch den Antriebsriemen im Bereich der zweiten Umlenkrolle verläuft.

Bei einer anderen Ausführungsform bei der die zweite Umlenkrolle als antriebslose Umlenkrolle ausgebildet ist, können zwei Untertrumumlenkrollen vorgesehen sein, die entsprechend angeordnet sind, und das Untertrum zur Antriebsrolle hin umleiten, so dass sich der gewünschte Umschlingungswinkel an der Antriebsrolle ergibt. Dabei kann die Antriebsrolle zwischen den beiden Untertrumumlenkrollen angeordnet sein, das heißt im Bereich des Untertrums, das sich zwischen den beiden Untertrumumlenkrollen erstreckt. Auch bei dieser Ausführungsform kann ein erster Teil des Untertrums, der von der ersten Umlenkrolle kommend zur ersten Untertrumumlenkrolle führt, entlang einer Geraden verlaufen, die in einer Ebene liegt, die senkrecht zur Rotationsachse der Umlenkrolle steht und durch den Antriebsriemen im Bereich der ersten Umlenkrolle verläuft. Entsprechend kann bei dieser Ausführungsform ein zweiter Teil des Untertrums, der von der zweiten Umlenkrolle kommend zur zweiten Untertrumumlenkrolle führt, entlang einer Geraden verlaufen, die in einer Ebene liegt, die senkrecht zur Rotationsachse der zweiten Umlenkrolle steht und durch den Antriebsriemen im Bereich der zweiten Umlenkrolle verläuft.

Der Förderrahmen des Kurvenrollenförderers weist ein entlang einer Kreislinie verlaufendes Innenprofil und eine Vielzahl von an dem Innenprofil befestigten Förderstreckenlagerelementen auf, die jeweils zur Bildung einer Lagerstelle ein Langloch aufweisen, in dem ein Achsende der Förderrolle aufgenommen ist.

Das Langloch kann als Durchgangsloch oder als Sackloch ausgebildet sein. Die Lagerstellen können seitliche Begrenzungsflächen aufweisen, die zumindest über einen Abschnitt des Langlochs parallel zueinander verlaufen. Die Achsenden der Förderrollen, können sich im Betrieb eines derartigen Rollenförderers senkrecht zu der Förderebene, die durch die Förderrollen ausgebildet wird, in den länglichen Lagerstellen bewegen. So wird eine schwimmende Lagerung auf dem unterhalb der Förderrollen verlaufenden Antriebsriemen ermöglicht, bei der die Förderrollen aufgrund ihres Gewichts bzw. des Gewichts der transportierten Fördergüter auf dem Antriebsriemen aufliegen. Aufgrund der parallelen seitlichen Begrenzungsflächen können die Achsenden oder Wellenenden der Förderrollen in Förderrichtung in den Lagerstellen fixiert werden. Da das Langloch nach oben geschlossen ist kann ein Herausrutschen der Achsenden aus den Lagerstellen verhindert werden. Kurvenaußenseitig können korrespondierende Förderstreckenlagerelemente mit nach oben offenen Lagerstellen vorgesehen sein, so dass die kurvenaußenseitigen Achsenden von oben in die kurvenaußenseitigen Förderstreckenlagerelemente eingelegt werden können. Die Förderstreckenlagerelemente können aus einer ebenen Kunststoffplatte ausgeschnitten werden, z.B. mittels Wasserstrahlschneiden. Alternativ können die Förderstreckenlagerelemente auch im Spritzgussverfahren hergestellt werden, insbesondere im Kunststoff-Spritzgussverfahren.

Bei einem solchen Kurvenrollenförderer kann gemäß einer weiteren Ausführungsform jedes der Förderstreckenlagerelemente den jeweils benachbarten Förderstreckenlagerelementen zugewandte Stirnflächen aufweisen, wobei eine erste seitliche Stirnfläche einen Führungsvorsprung und eine zweite seitliche Stirnfläche eine korrespondierende Führungsausnehmung aufweist, wobei die Führungsvorsprünge der Förderstreckenlagerelemente jeweils in Führungsausnehmungen der benachbarten Förderstreckenlagerelemente eingreifen und derart gestaltet sind, dass ein Verkippen der Förderstreckenlagerelemente zueinander verhindert wird.

Führungsvorsprünge und korrespondierende Führungsausnehmungen können insbesondere derart gestaltet sein, dass ein Verkippen der benachbarten Förderstreckenlagerelemente zueinander in einer Ebene verhindert wird, die senkrecht auf die Rotationsachsen der Förderrollen steht, deren Achsen in den Lagerstellen der Förderstreckenlagerelemente aufgenommen sind.

Eine weitere Ausführungsform betrifft einen der vorstehenden Kurvenrollenförderer, wobei der Kurvenrollenförderer ferner ein an dem Innenprofil des Förderrahmens angebrachtes konsolenartiges Befestigungselement aufweist, das als längliches Blechbiegeteil ausgeführt ist, und das zur Befestigung mehrerer der Vielzahl von Förderstreckenlagerelementen dient.

Das Befestigungselement kann entlang der Kreislinie gebogen verlaufen, die dem Verlauf des Innenprofils entspricht. Das Befestigungselement kann einen entlang der Kreislinie verlaufenden Befestigungsbereich aufweisen, der an dem Innenprofil befestigt, z.B. verschraubt, vernietet oder verschweißt ist. Von dem Befestigungsbereich aus können sich eine Vielzahl von Blechzungen erstrecken, die in seitlicher Richtung auf der konvexen Seite des Blechstreifens jeweils zum Blechstreifen um einen Winkel, z.B. um 90°, abgekantet sind. Durch diese Abkantungen können (waagrechte) Auflagebereiche ausgebildet werden auf denen die Förderstreckenlagerelemente aufliegen können. An jeden dieser Auflagebereiche kann sich im weiteren Verlauf der jeweiligen Blechzunge ein weiterer Abschnitt anschließen, der z.B. als senkrecht nach oben verlaufende Abkantung ausgebildet und als Klemmbereich bezeichnet werden kann. Der Abstand einer Klemmfläche an dem Klemmbereich zum Innenprofil kann dabei der Dicke des korrespondierenden Förderstreckenlagerelements entsprechen, so dass das jeweilige Förderstreckenlagerelement in radialer Richtung der Förderkurve fixiert wird.

Bei einem solchen Kurvenrollenförderer kann gemäß einer weiteren Ausführungsform das konsolenartige Befestigungselement eine Vielzahl von Positionsausnehmungen aufweisen, in die korrespondierende Positionsvorsprünge der Förderstreckenlagerelemente eingreifen, so dass die Positionen der Förderstreckenlagerelemente entlang des Innenprofils in Richtung der Kreislinie definiert festgelegt sind.

Dabei kann z.B. an jeder Blechzunge eine Positionsausnehmung vorgesehen sein. Die Positionsausnehmung kann z.B. im Bereich des Auflagebereichs ausgebildet sein.

Bei noch einer weiteren Ausführungsform des Kurvenrollenförderers sind die Tragrollen und/oder die Stützrollen an dem Befestigungselement befestigt.

Dabei kann im weiteren Verlauf der vorstehend beschriebenen Blechzungen nach dem Klemmbereich eine weitere Abkantung als Stützrollenauflager vorgesehen sein. Das Stützrollenauflager kann im Verhältnis zum Klemmbereich um 90° zur Kurvenaußenseite abgekantet sein. Ein Lagerblock kann kurvenaußenseitig an der Auflagekonsole befestigt sein, insbesondere mit dem Stützrollenauflager verschraubt werden. An dem Lagerblock können die Tragrollen und/oder die Stützrollen befestigt werden.

Gemäß noch einer weiteren Ausführungsform eines vorstehend beschriebenen Kurvenrollenförderers weisen die Förderrollen jeweils zumindest eine Achse zumindest ein konisches Mantelelement und eine Antriebshülse auf, wobei das zumindest eine konische Mantelelement und die Antriebshülse drehbar um die zumindest eine Achse gelagert sind, wobei die Antriebshülse zur Herstellung eines Antriebskontakts auf dem Antriebsriemen aufliegt und drehmomentenbehaftet relativ zu dem konischen Mantelelement verdrehbar ist.

Bei einer solchen Gestaltung kann durch die Antriebshülse eine Art Rutschkupplung zwischen Antriebshülse und Mantelelement erzeugt werden, durch die z.B. abrupte Geschwindigkeitsunterschiede von Fördergütern im Verhältnis zu den schwimmend angetriebenen Förderrollen ausgeglichen werden können. So kann z.B. der Verschleiß des Antriebsriemens deutlich vermindert werden.

Eine solche Förderrolle kann z.B. ein zylindrisches Tragrohr aufweisen, auf dem das konische Mantelelement aufgesteckt ist. Das Tragrohr kann auf der zumindest einen Achse, z.B. über Wälzlager, drehbar gelagert sein. Die zumindest eine Achse kann sich einstückig, durchgehend von einem Ende des Tragrohrs zum anderen Ende erstrecken oder durch zwei getrennte Achsen gebildet sein, die jeweils an einem Ende des Tragrohrs vorgesehen sind.

Der Außendurchmesser des Tragrohrs und der Innnendurchmesser des Mantelelements können zusammen eine Presspassung bilden, so dass das Mantelelement fest auf dem Tragrohr sitzt. Das Mantelelement kann einstückig ausgebildet sein oder aus mehreren konischen Teilelementen bestehen, die jeweils den gleichen Innendurchmesser aufweisen, also jeweils auf dem Tragrohr aufgepresst sein können. Dabei können die Außenoberflächen der Teilelemente jeweils als unterschiedliche Konen mit der selben Steigung ausgebildet sind, die sich zu einer konischen Gesamtoberfläche ergänzen.

Die Antriebshülse kann als kurzer ringförmiger Abschnitt ausgebildet sein. Der ringförmige Abschnitt kann kurveninnenseitig im Bereich des Antriebsriemens auf das Tragrohr der Förderrolle aufgeschoben werden. Dabei kann der Ring eine Breite aufweisen, der nur unwesentlich größer als der Durchmesser des Antriebsriemens ist, so dass der Großteil der Breite der Förderrolle durch das Mantelelement gebildet wird, deren konische Oberfläche die Transportfläche des Rollenförderers gemäß dieser Ausführungsform bilden. Die Antriebshülse kann spielbehaftet auf dem Tragrohr sitzen, so dass die Antriebshülse im Verhältnis zum Tragrohr leichter gedreht werden kann als das fest auf dem Tragrohr sitzenden Mantelelement. Z.B. kann die Antriebshülse einen lichten Innendurchmesser aufweisen, der 0,05 mm bis 0,8 mm größer ist als der korrespondierende Außendurchmesser des Tragrohrs. Bevorzugt ist der lichte Innendurchmesser um 0,08 mm bis 0,4 mm größer, insbesondere im Bereich von 0,1 mm größer, als der korrespondierende Außendurchmesser des Tragrohrs. So kann gewährleistet werden dass die Antriebshülse zumindest um den Faktor 3, bevorzugt um den Faktor 10 leichter auf dem Tragrohr zu drehen als das Mantelelement oder als jedes Teilelement des Mantelelements. Die gewünschte Reibung zwischen Antriebshülse und Tragrohr kann auch durch die Materialpassung der beiden Teile beeinflusst werden. Zum Beispiel kann das Tragrohr aus Metall hergestellt sein und die Antriebshülse aus Kunststoff, insbesondere aus einem Polyamid-Material hergestellt sein. Die Antriebshülse kann eine zylindrische Außenoberfläche aufweisen. Dabei kann der Außendurchmesser etwas kleiner bemessen sein, als der angrenzende dünnste Durchmesser des konusförmigen Manteleiements.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereit stellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden um unnötige Wiederholungen zu vermeiden bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann, und daher in Erwägung gezogen und auch als von der Beschreibung umfasst angesehen werden soll.

### Kurze Beschreibung der Zeichnungen

- Figur 1a: zeigt eine erste Ausführungsform eines Rollenförderers von unten.
- Figur 1b: zeigt einen Ausschnitt aus Figur 1a.
- Figur 1c: zeigt die erste Ausführungsform des Rollenförderers aus Figur 1a in einer isometrischen Ansicht von schräg unten.
- Figur 2a: zeigt eine zweite Ausführungsform eines Rollenförderers von unten.
- Figur 2b: zeigt einen Ausschnitt aus Figur 2a.
- Figur 2c: zeigt die zweite Ausführungsform des Rollenförderers aus Figur 2a in einer isometrischen Ansicht von schräg unten.
- Figur 3: zeigt eine isometrische Seitenansicht des Rollenförderers bei der einige Komponenten zu Zwecken der Erläuterung in der Darstellung weggelassen wurden.
- Figur 4: zeigt einen Teilbereich des Rollenförderers in einer isometrischen Ansicht schräg von unten.
- Figur 5: zeigt ein Befestigungselement zur Befestigung mehrerer Förderstreckenlagerelemente.
- Figur 6: zeigt ein Förderstreckenlagerelement.
- Figur 7: zeigt ein kurvenaußenseitiges Lagerelement.
- Figur 8: zeigt den kurveninnenseitigen Bereich einer Förderrolle gemäß einer weiteren Ausführungsform des Rollenförderers.

### Detaillierte Beschreibung der Zeichnung

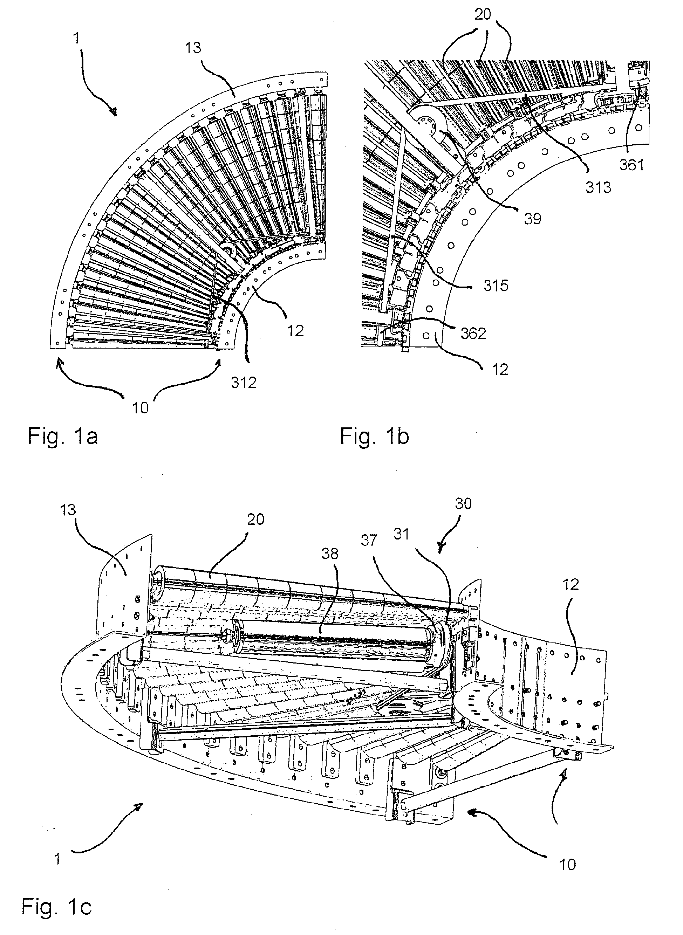

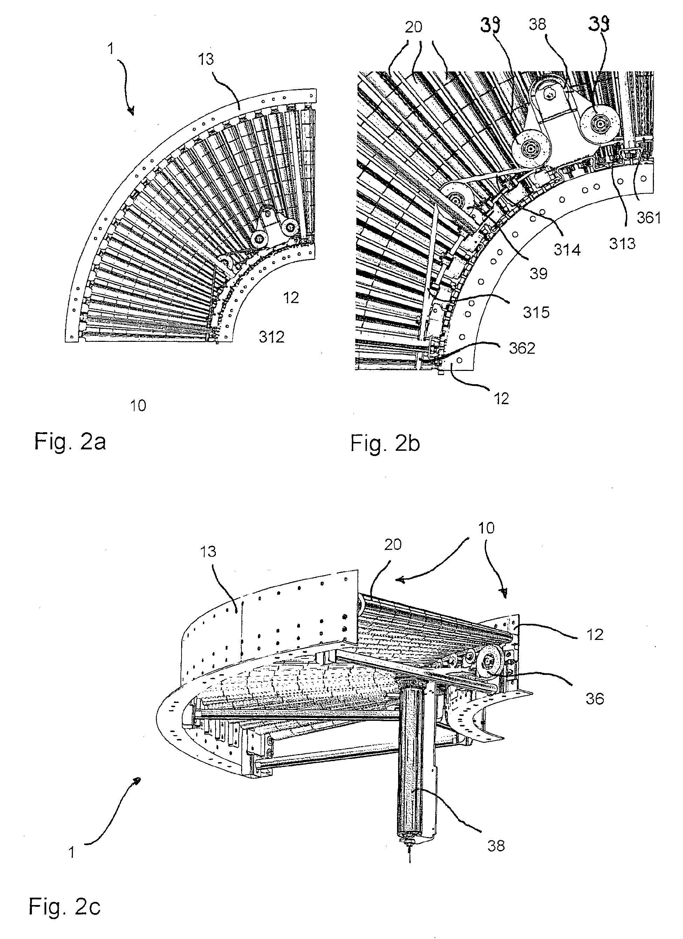

Die Figuren 1a bis 1c und die Figuren 2a bis 2c zeigen zwei verschiedene Ausführungsformen eines Rollenförderers, in denen jeweils als Kurvenrollenförderer 1 ausgebildet ist, wobei die erste Ausführungsform einen liegenden Antriebsmotor 38 und die zweite Ausführungsform einen stehenden Antriebsmotor 38 aufweist. Dabei zeigen Figur 1 a und Figur 2a jeweils das gesamte Kurvensegment von der Unterseite des Rollenförderers 1. Figuren 1b und 2b zeigen jeweils einen vergrößerten Ausschnitt aus der gleichen Blickrichtung. Figuren 1c und 2c zeigen das jeweilige Kurvensegment in einer isometrischen Ansicht von schräg unten.

In der dargestellten Ausführungsformen ist der Antriebsmotor 38 in Form einer angetriebenen Förderrolle ausgebildet, an deren einem axialen Ende eine Antriebsrolle 37 befestigt ist. Angetriebene Förderrollen bezeichnen Förderrollen, die in Rollenförderern als Förderrollen eingesetzt werden und die innerhalb des zylindrischen Förderrollenmantels eine Antriebseinheit, insbesondere einen Elektromotor aufweisen. Diese Art von angetriebenen Förderrollen werden in großen Stückzahlen produziert und sind daher auf den Markt günstig zu erwerben. Außerdem weisen angetriebene Förderrollen im Vergleich zu anderen Antriebsmotoren einen verhältnismäßig geringen Durchmesser auf, was insbesondere bei der waagerechten Anordnung des Antriebsmotors 38 zu einer Platz sparenden Konstruktionsform führt. In den dargestellten Ausführungsformen werden diese angetriebenen Förderrollen nicht als Förderrollen im Wortsinn eingesetzt, da sie unterhalb der Förderebene angeordnet sind und nicht in unmittelbarer Berührung zu den auf dem Rollenförderer 1 transportierten Fördergütern kommen.

Bei beiden Ausführungsformen weist der Rollenförderer 1 einen Förderrahmen 10 mit einem Innenprofil 12 und einem Außenprofil 13 auf. Sowohl das Innenprofil 12 als auch das Außenprofil 13 weisen einen kurvenförmigen Verlauf auf, der in den dargestellten Ausführungsformen entlang eines Abschnitts einer Kreislinie verläuft. Dabei weisen die Kreislinien sowohl des Innenprofils 12 als auch des Außenprofils 13 jeweils den gleichen Mittelpunkt auf, der auch als Kurvenmittelpunkt bezeichnet werden kann. Die dargestellten Kurvensegmente beschreiben jeweils ein 90° Segment. Kurvenrollenförderer können jedoch je nach Einsatzgebiet auch andere Winkel abdecken.

Entlang der Förderstrecke sind zwischen dem Innenprofil 12 und dem Außenprofil 13 jeweils eine Vielzahl von Förderrollen 20 angeordnet. Zur Lagerung der Förderrollen 20 sind entlang des Innenprofils 12 eine Vielzahl von Förderstreckenlagerelementen 50 und entlang des Außenprofils 13 eine Vielzahl von kurvenaußenseitigen Förderstreckenlagerelementen 60 vorgesehen, die nachfolgend mit Bezug auf die anderen Figuren noch im Detail beschrieben werden.

Beide dargestellten Ausführungsformen weisen einen Antriebsriemen 31 mit einem runden Querschnitt auf. Der Antriebsriemen 31 kann auch als Rundriemen bezeichnet werden. Rundriemen weisen gegenüber von Antriebsriemen mit anderen Querschnitten den Vorteil auf, dass sie quer zur Längserstreckung des Riemens in beliebige Richtungen gebogen werden können, so dass sie in unterschiedliche Richtungen gut umgelenkt werden können.

In beiden Ausführungsformen sind die Antriebsriemen 31 als Endlosriemen ausgebildet, die jeweils ein Obertrum 311 und einen Untertrum 312 aufweisen. Der Begriff Obertrum 311 bezeichnet den oberen Abschnitt des Antriebsriemens 31, der oberhalb der Umlenkrollen 36 verläuft. Der Begriff Untertrum 312 bezeichnet den Teil des Endlosriemens, der in der dargestellten Ausführungsform unterhalb der Umlenkrollen 36 zurückläuft.

Das Obertrum 311 verläuft bei beiden Ausführungsformen kurveninnenseitig im Bereich des Innenprofils 12 im Wesentlichen entlang eines Abschnitts einer Kreislinie. Hierzu sind im Bereich des Innenprofils 12 eine Vielzahl von Stützrollen 33 vorgesehen, die das Obertrum 311 zur Kurveninnenseite hin abstützen. Die Anordnung der Stützrollen 33 wird in Bezug auf die anderen Figuren detailliert beschrieben. Da das Obertrum 311 zwischen jeder Stützrolle 33 im wesentlichen entlang einer Geraden verläuft, kann der Verlauf des Obertrums 311 auch als Polygonzug beschrieben werden. Je mehr Stützrollen 33 vorgesehen werden, desto feiner ist der Polygonzug abgestuft und desto mehr ist der Polygonzug einer Kreislinie angenähert. In den dargestellten Ausführungsformen ist alle zwei Förderrollen 20 eine Stützrolle 33 vorgesehen. Denkbar ist jedoch ebenfalls, dass zwischen jeweils zwei Förderrollen 20 eine Stützrolle 33 vorgesehen ist, oder dass nur eine Stützrolle 33 alle drei oder alle vier Förderrollen 20 vorgesehen ist.

Auf dem entlang der Kurvenlinie gespannten Obertrum 311 liegen die kurveninnenseitigen Bereiche der Förderrollen 20 auf. Jede der Förderrollen 20 steht im Wesentlichen senkrecht auf den Verlauf der Kurvenlinie. Da der Verlauf des Obertrums 311 der Kurvenlinie in diesem Bereich polygonartig stark angenähert ist, tangiert das Obertrum 311 jede der Förderrollen 20 im Wesentlichen senkrecht. Im Betrieb des Rollenförderers 1 kann daher die Relativbewegung zwischen den durch das Obertrum 311 angetriebenen Förderrollen 20 als im Wesentlichen rollende Abtragung beschrieben werden, weil die Relativbewegung annähernd keine Bewegungskomponente in Längsrichtung der jeweiligen Förderrolle 20 aufweist. Durch diese Gestaltung kann Reibung und Verschleiß des Antriebsriemens minimiert werden.

Um einen möglichst ebenen Verlauf der Förderebene und eine gleichmäßige Übertragung der Antriebskräfte zwischen Antriebsriemen 31 und Förderrollen 20 zu ermöglichen, sind unterhalb des Obertrums 311 eine Vielzahl von Tragrollen 32 vorgesehen, welche das Gewicht der Förderrollen 20 sowie der auf dem Rollenförderer 1 beförderten Lasten tragen. Die Tragrollen 32 und deren Befestigung wird in Bezug auf die folgenden Figuren detailliert beschrieben.

Aufgrund der unterschiedlichen Anordnungen des Antriebsmotors 38 unterscheiden sich die beiden Ausführungsformen, insbesondere hinsichtlich des Verlaufs des Untertrums 313.

Bei der Ausführungsform mit dem liegenden Antriebsmotor 38, die in den Figuren 1a, 1b und 1c dargestellt wird, ist lediglich eine einzige Untertrumumlenkrolle 39 erforderlich und eine der Umlenkrollen 36 ist als Antriebsrolle 37 ausgeführt. Dabei ist die Untertrumumlenkrolle 39 derart angeordnet, dass ein tangentialer Verlauf des ersten Teils des Untertrums 313 und des zweiten Teils des Untertrums 315 an den Kurvenverlauf gewährleistet ist. So wird ermöglicht, dass das Untertrum 312 sowohl von der ersten Umlenkrolle 361 als auch von der zweiten Umlenkrolle 362 jeweils senkrecht zum Verlauf der Rotationsachsen der Umlenkrollen 361, 362 auf die Umlenkrollen 361, 362 abläuft beziehungsweise aufläuft. So wird die Reibung zwischen der ersten Umlenkrolle 361 und dem ersten Teil des Untertrums 313 sowie die Reibung zwischen der zweiten Umlenkrolle 362 und dem zweiten Teil des Untertrums 315 minimiert. Diese Ausführungsform kommt daher mit einer minimalen Zahl an Umlenkungen aus, was zu einem besonders geringen Energiebedarf und zu niedrigen Geräuschemissionen führt.

Bei der Ausführungsform mit dem stehenden Antriebsmotor 38, die in den Figuren 2a, 2b und 2c dargestellt wird, sind zwei Untertrumumlenkrolle 39 vorgesehen, welche die Antriebsrolle 37 flankieren, so dass ein für die Kraftübertragung erforderlicher Umschlingungswinkel des Antriebsriemens 31 um die Antriebsrolle 37 gewährleistet ist. In der dargestellten Ausführungsform ist eine weitere Untertrumumlenkrolle 39 vorgesehen, um eine Berührung des Untertrums 312 mit dem Innenprofil 12 zu vermeiden. Dabei sind auch bei dieser Ausführungsform die Untertrumumlenkrollen 39 derart angeordnet, dass ein tangentialer Verlauf des ersten Teils des Untertrums 313 und des zweiten Teils des Untertrums 315 gewährleistet ist. Auch hier wird demnach ein schräger Verlauf des Antriebsriemens 31 zu einer der Umlenkrollen 361, 362 vermieden. Die senkrechte Anordnung des Antriebsmotors 38 führt zu einem geringen Platzbedarf in radialer Richtung des Kurvenverlaufs. Bei dieser Ausführungsform können daher auch deutlich schmalere Rollenbahnen verwirklicht werden.

Je nach Platzbedarf kommen weitere Ausführungsformen infrage, bei denen der Antriebsmotor 38 z.B. auch schräg stehen kann. Dabei ermöglicht der Rundriemen aufgrund seiner Umlenkbarkeit in verschiedene Richtungen verschiedenste Ausführungen.

In den dargestellten Ausführungsformen sind die Antriebsriemen 31 aus einem Material hergestellt, welches Polyurethan umfasst. Dabei können PU-Riemen mit oder ohne Seele verwendet werden. Derartige PU-Riemen, inbsesondere die PU-Riemen ohne Seele, besitzen gute elastische Eigenschaften und können je nach Ausführungsform bis zu 6% gedehnt werden. Aufgrund dieser Elastizität können gewisse Toleranzen bei der Anordnung der verschiedenen Umlenkrollen 36 und der Untertrumumlenkrollen 39 aufgrund der Dehnfähigkeit des Antriebsriemens 31 ausgeglichen werden, so dass bei dieser Ausführungsform auf eine aufwändige Riemenspannvorrichtung verzichtet werden kann.

Mit Bezug auf die übrigen Figuren werden im Folgenden die Förderstreckenlagerelemente 50, die am Innenprofil 12 des Förderrahmens 10 befestigt sind, die kurvenaußenseitigen Förderstreckenlagerelemente 60 sowie deren Befestigung beschrieben.

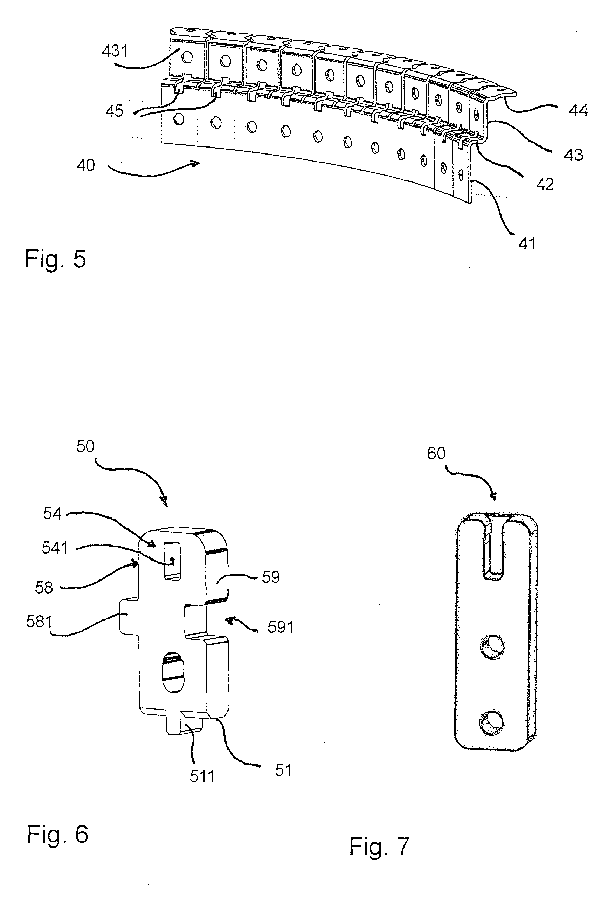

In Figur 6 ist ein Förderstreckenlagerelement 50 in einer isometrischen Ansicht von schräg oben dargestellt.

Das Förderstreckenlagerelement 50 weist eine längliche Lagerstelle 54 auf. Die Lagerstelle 54 ist in der dargestellten Ausführungsform als Durchgangsloch ausgebildet. Die Lagerstelle 54 weist zwei im Wesentlichen parallel verlaufende Lagerstellenbegrenzungsflächen 541 auf. Die Lagerstellenbegrenzungsflächen 541 weisen einen Abstand zueinander auf, der im Wesentlichen dem Durchmesser eines Achsendes 22 einer Förderrolle 20 entspricht. Wenn ein Achsende 22 in die Lagerstelle 54 eingesetzt wird, kann sich das Achsende in der Lagerstelle 54 nach oben und nach unten bewegen und wird über die Lagerstellenbegrenzungsflächen 541 in seitlicher Richtung fixiert.

Auf der anderen Seite der jeweiligen Förderrolle 20 können kurvenaußenseitige Förderstreckenlagerelemente 60 vorgesehen sein. Diese kurvenaußenseitigen Förderstreckenlagerelemente 60 können eine Gestaltung aufweisen, wie sie in Figur 7 dargestellt ist. Ein solches kurvenaußenseitiges Förderstreckenlagerelement 60 kann demnach eine nach oben offene Lagerstelle und ein oder mehrere Befestigungslöcher aufweisen. Über die Befestigungslöcher kann das Lagerelement an dem Außenprofil 13 festgeschraubt werden. Diese Art der Befestigung ist lediglich beispielhaft. Andere Arten der Befestigung sind ebenfalls denkbar. Die nach oben offene Lagerstelle ermöglicht eine einfache Montage der Förderrollen, wonach zuerst ein Achsende 22 in die Lagerstelle 54 des Förderstreckenlagerelements 50 eingesteckt wird und dann das gegenüberliegende Achsende der Förderrolle 20 in die nach oben offene Lagerstelle des kurvenaußenseitigen Förderstreckenlagerelements 60 eingeschwenkt wird.

Zur Befestigung der Förderstreckenlagerelemente 50 ist zumindest ein Befestigungselement 40 vorgesehen. In der dargestellten Ausführungsform weist das Befestigungselement 40 einen Befestigungsbereich 41 zur Befestigung des Befestigungselements 40 an dem Innenprofil 12 auf. Ferner weist das Befestigungselement 40 einen im Wesentlichen waagerecht verlaufenden Auflagebereich 42 auf. Das Befestigungselement 40 kann z.B. als Blechbiegeteil ausgeführt sein.

Der Auflagebereich 42 des Befestigungselements 40 kann als Auflagefläche für eine Vielzahl von Förderstreckenlagerelementen 50 dienen. Dabei können die Konsolenanlageflächen 51 der Förderstreckenlagerelemente 50 eben auf dem Auflagebereich 42 des Befestigungselements 40 aufliegen, so dass ein äquidistanter Abstand der unteren Bereiche der Lagerstellen 54 zum Auflagebereich 42 sichergestellt wird. Ferner können die Förderstreckenlagerelemente 50 jeweils Positionsvorsprünge 511 im Bereich der Konsolenanlagefläche 51 aufweisen, die in korrespondierende Positionsausnehmungen 45 eingreifen können, die im Auflagebereich 42 des Befestigungselements 40 vorgesehen sind. In der dargestellten Ausführungsform weist jedes Förderstreckenlagerelement 50 einen Positionsvorsprung 511 auf, der sich nasenartig von der Konsolenanlagefläche 51 nach unten erstreckt.

Durch die Positionsausnehmungen 45 und die korrespondierenden Positionsvorsprünge 511 kann eine definierte Position des Förderstreckenlagerelements 50 in Richtung des Verlaufs des Obertrums 311 des Antriebsriemens 31 sichergestellt werden, so dass die Förderrollen 20 jeweils einen definierten Abstand zu der Nachbarrolle aufweisen. Bei anderen Ausführungsformen kann ein Förderstreckenlagerelement 50 jedoch auch mehrere Positionsvorsprünge 511 aufweisen. Denkbar ist ebenfalls, dass ein Förderstreckenlagerelement 50 einen mit der Krümmung des Innenprofils 12 korrespondierenden gebogenen Verlauf aufweist und mehrere Lagerstellen aufweist. Die vorliegende Gestaltung des Förderstreckenlagerelement 50 mit lediglich einer Lagerstelle 54 pro Förderstreckenlagerelement 50 hat jedoch den Vorteil, dass der Abstand der Förderrollen 20 zueinander in gewissen Grenzen variabel ist. Dies hat den Vorteil, dass ein Förderstreckenlagerelement 50 mit einer bestimmten Form und mit bestimmten Abmaßen für eine Vielzahl von unterschiedlichen Kurvenrollenförderern 1 verwendet werden kann. Bei Verwirklichung unterschiedlicher Winkelbereiche, die von einem Kurvenrollenförderer abgedeckt werden sollen, weisen die Förderrollen 20 zueinander jeweils einen unterschiedlichen Abstand auf.

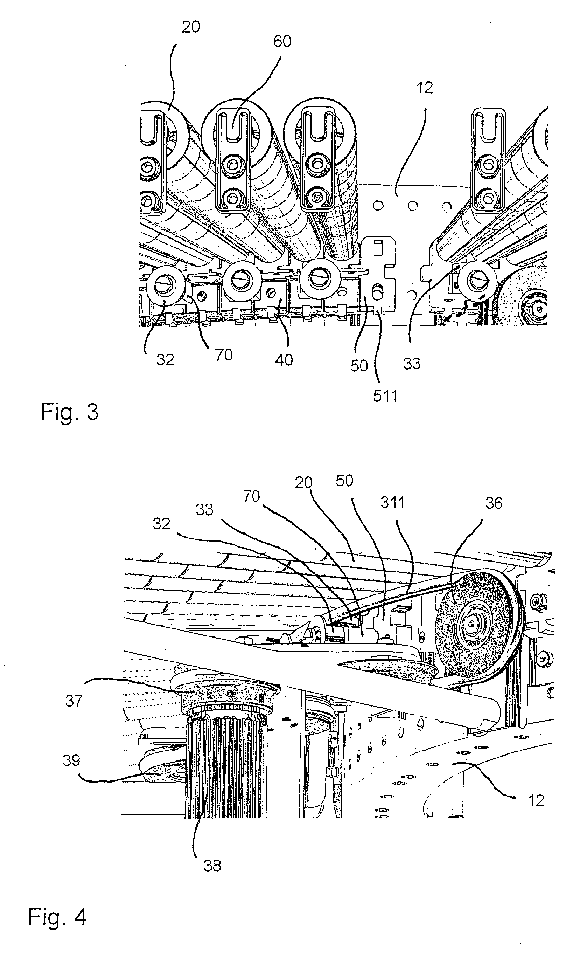

Die Förderstreckenlagerelemente weisen ferner jeweils eine erste seitliche Stirnfläche 58 auf, an der jeweils ein Führungsvorsprung 581 vorgesehen ist. Ferner weisen die Förderstreckenlagerelemente 50 jeweils auf einer der ersten seitlichen Stirnfläche 58 gegenüberliegenden zweiten seitlichen Stirnfläche 59 jeweils eine Führungsausnehmungen 591 auf, welche mit dem Führungsvorsprung 581 korrespondiert. Demnach kann der Führungsvorsprung 581 in die korrespondierende Führungsausnehmung 591 des benachbarten Förderstreckenlagerelements 50 eingreifen. Sowohl die Führungsausnehmung 591 als auch der Führungsvorsprung 581 weisen in der dargestellten Ausführungsform parallele Führungsflächen auf, welche denselben Abstand haben. Durch das Eingreifen des Führungsvorsprung 581 in die korrespondierende Führungsausnehmung 591 wird daher ein Verkippen des Förderstreckenlagerelements 50 im Verhältnis zum benachbarten Förderstreckenlagerelement 50 verhindert. Die Anordnung der Förderstreckenlagerelemente 50 zueinander ist in Figur 3 ersichtlich.

In der dargestellten Ausführungsform des Befestigungselements 40 ist der Auflagebereich 42 durch eine Vielzahl von Blechzungen gebildet, die sich von dem Befestigungsbereich 41 aus erstrecken. Dabei ist jeweils eine Blechzunge pro Förderstreckenlagerelement 50 vorgesehen. Jede Blechzunge ist zunächst waagerecht nach außen gebogen, um den Auflagebereich 42 für das jeweilige Förderstreckenlagerelement 50 bereitzustellen. In diesem Bereich ist jeweils die Positionsausnehmung 45 angeordnet. Im weiteren Verlauf der jeweiligen Blechzunge schließt sich ein Klemmbereich 43 an, der im Wesentlichen senkrecht nach oben verläuft. Wenn das Befestigungselement 40 an dem Innenprofil 12 befestigt ist, weisen Klemmflächen 431, die an jeder Blechzunge im Bereich des Klemmbereichs 43 kurveninnenseitig angeordnet sind, einen Abstand zur Oberfläche des Innenprofils 12 auf, welcher der Materialstärke des Förderstreckenlagerelements 50 entspricht. Die Oberfläche des Innenprofils 12, der Auflagebereich 42 und der Klemmbereich 43 bilden demnach gemeinsam eine rinnenförmigen Vertiefung, in welche die Förderstreckenlagerelemente 50 eingesetzt werden können. Aufgrund der Positionsvorsprünge 511, welche in die Positionsausnehmungen 45 eingreifen, ist der Abstand der Förderstreckenlagerelemente 50 zueinander definiert. Aufgrund der Führungsvorsprünge 581 und der Führungsausnehmungen 591 wird ein Verkippen der Förderstreckenlagerelemente 50 zueinander verhindert. Durch diese Gestaltung kann die Montage der Komponenten an dem Förderrahmen 10 des Kurvenrollenförderers deutlich vereinfacht werden.

Die Tragrollen 32 und die Stützrollen 33 sind entlang des Verlaufs des Obertrums 311 im Verhältnis zur Position der Lagerstelle 54 um einen bestimmten Abstand versetzt angeordnet. In der dargestellten Ausführungsform entspricht dieser bestimmte Abstand dem halben Abstand einer Förderrolle 20 zur benachbarten Förderrolle 20. Durch diese Gestaltung kann erreicht werden, dass Tragrollen 32 beziehungsweise Stützrollen jeweils in etwa mittig zwischen zwei Förderrollen 20 positioniert sind. Durch diese Gestaltung wird ein hinsichtlich Reibung und Verschleiß günstiger Verlauf des Obertrums 311 erzielt.

In Figur 3 ist dargestellt, dass die Förderstreckenlagerelemente 50 jeweils hinter den Klemmbereichen 43 einer Blechzunge des Befestigungselements 40 angeordnet sind. In dieser Figur ist ebenfalls ersichtlich, dass alle zwei Förderrollen 20 eine Tragrolle 32 angeordnet ist, welche den in dieser Figur nicht dargestellten Antriebsriemen 31 von unten trägt. Oberhalb der Tragrollen 32 ist jeweils vom Antriebsriemen 31 aus gesehen kurveninnenseitig eine Stützrolle 33 angeordnet. Der Verlauf des Obertrums 311 im Verhältnis zu den angrenzenden Komponenten ist in Figur 4 genauer dargestellt.

Dabei sind die Tragrollen 32 und die Stützrollen 33 an Lagerblöcken 70 befestigt. In der dargestellten Ausführungsform ist eine Tragrolle 32 und eine Stützrolle 33 pro Lagerblock vorgesehen. Der Lagerblock 70 wiederum ist außenseitig an dem Klemmbereich 43 befestigt. Hierzu kann der Lagerblock auf der dem Klemmbereich 43 zugewandten Seite ein Gewinde aufweisen. So kann eine Schraube durch das Innenprofil 12, durch ein Loch im Förderstreckenlagerelement 50 und durch ein weiteres Loch in Klemmbereich 43 gesteckt werden und in das Gewinde des Lagerblocks 70 eingeschraubt werden.

Auf der Oberseite des Lagerblocks 70 kann eine Stützrollenachse befestigt werden, welche die Stützrolle 33 trägt. Die Stützrollenachse kann sich dabei durch ein Loch in einem Stützrollenauflager 44 erstrecken, welches sich als Fortsetzung der Blechzunge in waagerechter Richtung an den Klemmbereich 43 anschließt. Auf der dem Klemmbereich 43 gegenüberliegenden Seite des Lagerblocks 70 kann eine Tragrollenachse befestigt werden, welche die Tragrollen 32 trägt.

Im montierten Zustand ist der Lagerblock 70 derart angeordnet, dass die Tragrollenachsen 55 im Wesentlichen in waagerechter Richtung entlang eines Radiusstrahls, der sich jeweils vom Kurvenmittelpunkt durch die jeweilige Tragrollenachse erstreckt, angeordnet sind. Die Stützrollenachsen 56 weisen eine aufrechte im Wesentlichen senkrechte Position auf. Sowohl die Tragrollen 32 als auch die Stützrollen 33 weisen eine kreiszylindrische Form auf, so dass der Antriebsriemen 31 mit dem runden Querschnitt die Rollen jeweils lediglich punktförmig berührt. Da die Punkte, an denen die Tragrollen 32 den Antriebsriemen 31 berühren, um die Hälfte des Durchmessers des Antriebsriemens 31 weiter vom Kurvenmittelpunkt entfernt liegen als die Punkte, an denen die Stützrollen 33 den Antriebsriemen 31 berühren, weist der Antriebsriemen, der sich entlang einer Kreisbahn um den Kurvenmittelpunkt bewegt, in diesen Punkten unterschiedliche Geschwindigkeiten auf, so dass sich die Stützrollen 33 etwas langsamer drehen können als die Tragrollen 32. Die Lagerung des Antriebsriemens 31 über getrennte Tragrollen 32 und Stützrollen 33 vermindert daher gegenüber einer Lagerung durch eine Rolle mit einer konkaven Oberfläche oder einer Tragrollen mit Seitenbord eine gleitende Abtragung des Antriebsriemens an bestimmten Oberflächenbereichen.

In der dargestellten Ausführungsform sind die Tragrollen kurvenaußenseitig mit einem Bord versehen. Da der Antriebsriemen 31 zum Innenprofil 12 hin gespannt ist, berührt der Antriebsriemen 31 dieses Bord nicht. Bei Versuchen hat sich gezeigt, dass der Antriebsriemen 31 aufgrund seiner Spannung zum Innenprofil 12 hin nicht dazu neigt, von den Tragrollen abzurutschen, auch wenn das in den Figuren dargestellte Bord weggelassen wird. Die Tragrollen 32 können daher auch als bordlose Rollen ausgebildet sein, die weder kurveninnenseitig noch kurvenaußenseitig ein Bord aufweisen. Solche Tragrollen 32 können ferner eine kreiszylindrische Tragrollenoberfläche aufweisen.

Eine Gestaltung der Tragrollen 32, die auf der Kurvenaußenseite der jeweiligen Tragrolle kein Bord aufweisen, hat den Vorteil einer besonders einfachen Montage des Antriebsriemens, der bei der Montage nicht durch den engen Spalt zwischen Tragrollenbord und Förderrollen gezwungen werden muss. In Verbindung mit den dargestellten Ausführungsformen der Untertrumführung mit liegendem bzw. stehendem Antriebsmotor kann der Antriebsriemen in einem Schadensfall ausgetauscht werden, ohne Komponenten des Rollenförderers demontieren zu müssen. Da der in der Ausführungsform verwendete PU-Rundriemen elastisch ist und auf deshalb auch auf eine Spannvorrichtung verzichtet werden kann, ist bei der Montage auch keine gesonderte Einstellung der Antriebsriemenspannung erforderlich. Ein Austausch des Antriebsriemens kann daher in kürzester Zeit erfolgen. Die Ausfallzeiten können auf ein Minimum reduziert werden.

Die senkrechte Lagerung der zylindrischen Stützrollen 33 verhindert, dass die Andruckkraft zwischen Antriebsriemen 31 und Stützrolle 33 eine Komponente in Richtung der Rotationsachse der Stützrolle 33 aufweist. Es sind daher keine zusätzlichen Befestigungsmittel erforderlich, welche ein Abrutschen des Antriebsriemens 31 von den Stützrollen 33 nach oben verhindern. Das Gewicht der Förderrollen 20 ist zu diesem Zweck auch im Fall von Trumschwingungen ausreichend, so dass bei dieser Ausführungsform auch ein Förderstreckenlagerelement 50 mit einer nach oben offenen Lagerstelle 54 verwendet werden könnte. Bei dem vorliegend beschriebenen Förderstreckenlagerelement 50 ist die Lagerstelle 54 jedoch als oben geschlossenes Langloch ausgebildet, so dass sich das Achsende 23 nur soweit nach oben bewegen kann, bis es an dem oberen Ende der Lagerstellen anschlägt. In dieser oberen Position verhindert der auf der Antriebsriemenseite angeordnete Oberflächenbereich der Förderrolle 20 ein Ausweichen des Antriebsriemens nach oben, das zu einem Abrutschen des Antriebsriemens von den Stützrollen 33 führen könnte.

Die Umlenkrollen 36, von denen eine in Figur 4 gezeigt ist, weisen in der dargestellten Ausführungsform eine konkave Oberfläche auf, so dass der Antriebsriemen 31 im Umschlingungsbereich sicher geführt ist. Insbesondere wenn eine der Umlenkrollen 36 als Antriebsrolle 37 ausgebildet ist, wie dies z.B. bei einem liegenden Antriebsmotor 38 der Fall sein kann, ist eine solche Oberflächengestaltung sinnvoll, da bei dieser Ausführung auch die Kraftübertragung zwischen Antriebsrolle 37 und Antriebsriemen 31 verbessert wird.

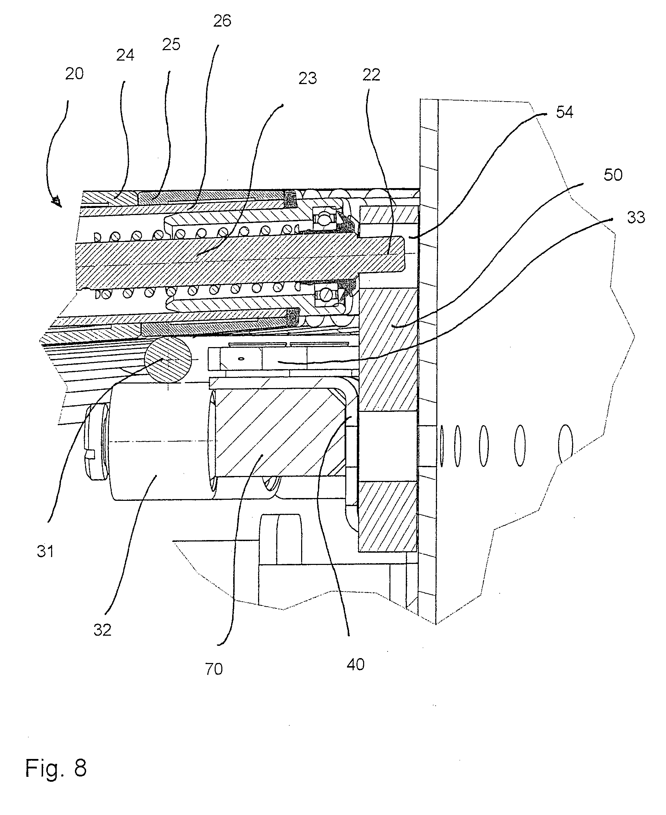

Figur 8 zeigt den kurveninnenseitigen Bereich einer Förderrolle 20 gemäß einer weiteren Ausführungsform des Rollenförderers 1.

Die dargestellte Förderrolle 20 gemäß dieser Ausführungsform weist ein Tragrohr 26 auf, das über ein Wälzlager um eine Achse 23 drehbar gelagert ist. Das Achsende 22 der Achse ist in der Lagerstelle 54 des angrenzenden Förderstreckenlagerelements 50 aufgenommen. Das Lagerelement 54 ist über das Befestigungselement 40 an dem Innenprofil 12 befestigt. An dem Befestigungselement 40 ist eines der Lagerblöcke geschnitten dargestellt. Hinter der Schnittebene ist die an dem Lagerblock angeordnete Tragrolle 32 und die korrespondierende Stützrolle 33 sichtbar, welche den Antriebsriemen tragen bzw. stützen.

Das Tragrohr 26 kann aus einem Metall, z.B. aus Stahl oder einer Aluminiumlegierung, hergestellt worden sein.

Auf dem Tragrohr 26 ist ein konisches Mantelelement 24 aufgesteckt, das aus mehreren konischen Teilelementen zusammengesetzt sein kann. Das Mantelelement 24 sitzt fest auf dem Tragrohr 26. Kurveninnenseitig ist direkt neben dem Mantelelement eine Antriebshülse 25 auf das Tragrohr 26 aufgesteckt. Zwischen der Antriebshülse 25 und dem Tragrohr 26 besteht ein leichtes Spiel, so dass die Antriebshülse 25 leichter um das Tragrohr 26 gedreht werden kann, als die fest auf dem Tragrohr 26 sitzenden Teilelemente des Mantelelements 24.

Die Förderrolle 20 liegt im Bereich der Antriebshülse 25 schwimmend auf dem runden Antriebsriemen 31 auf, so dass die Antriebskraft vom Antriebsriemen 31 über die Antriebshülse 25 auf das Tragrohr 26 und somit auf das konische Mantelelement 24 übertragen werden kann. Ein Antriebsdrehmoment der Antriebshülse 25 kann daher auf das Mantelelement 24 übertragen werden. Dabei ist der Reibbeiwert zwischen dem Material der Antriebshülse 25 und dem Material des Tragrohres 26 niedriger bemessen als der Reibbeiwert zwischen der Antriebshülse 25 und dem Antriebsriemen 31.

Durch diese Gestaltung können Verschleißerscheinungen vermindert werden, die z.B. durch abrupte Geschwindigkeitsunterschiede von Fördergütern im Verhältnis zu den angetriebenen Förderrollen verursacht werden können, z.B. wenn die Fördergüter im Übergabebereich zwischen einem geraden Bereich einer Förderanlage und dem Kurvenrollenförderer auf die Kurve auflaufen. In diesem Fall kann sich die Rotationsgeschwindigkeit der Mantelelemente an die Geschwindigkeit angleichen, ohne dass eine gleitende Reibung der Förderrolle auf dem Antriebsriemen 31 erzeugt wird. Vielmehr dreht sich in diesem Fall die Antriebshülse 25 auf dem Tragrohr 26 und rollt weiterhin auf dem Antriebsriemen 31 ab. So kann der Verschleiß insbesondere des Antriebsriemens 31 deutlich vermindert werden. Bei einer Herstellung der Antriebshülse 25 aus Polyamid kann auch der Verschleiß der auf einem Tragrohr 26 aus Metall aufgeschobenen Antriebshülse 25 gering gehalten werden.

Dabei kann der Radius des Tragrohrs 26 in dem Bereich, in dem die Antriebshülse 25 aufgeschoben wird, so groß gewählt werden, dass auch bei einer verhältnismäßig niedrigen Reibungskraft zwischen Tragrohr 26 und Antriebhülse 25 aufgrund des großen Radius im Kraftübertragungspunkt ein hinreichendes Antriebsdrehmoment erzeugt. Zum Beispiel kann der Radius des Tragrohrs 26 in dem Bereich, in dem die Antriebshülse 25 aufgeschoben wird, mehr als 70% des Außenradius der Antriebshülse betragen. Bevorzugt kann der Radius des Tragrohrs 26 im Bereich von 90% des Außenradius der Antriebshülse oder darüber liegen.

### Bezugszeichenliste

- 1: Rollenförderer
- 10: Förderrahmen
- 12: Innenprofil
- 13: Außenprofil
- 20: Förderrolle
- 22: Achsende
- 23: Achse
- 24: Mantelelement
- 25: Antriebshülse
- 26: Tragrohr
- 30: Antriebssystem
- 31: Antriebsriemen
- 311: Obertrum
- 312: Untertrum
- 313: erster Teil des Untertrums
- 314: mittlerer Teil des Untertrums
- 315: zweiter Teil des Untertrums
- 32: Tragrolle
- 33: Stützrolle
- 36: Umlenkrolle
- 361: erste Umlenkrolle
- 362: zweite Umlenkrolle
- 37: Antriebsrolle
- 38: Antriebsmotor
- 39: Untertrumumlenkrolle
- 40: Befestigungselement
- 41: Befestigungsbereich
- 42: Auflagebereich
- 43: Klemmbereich
- 431: Klemmfläche
- 44: Stützrollenauflager
- 45: Positionsausnehmung
- 50: Förderstreckenlagerelement
- 51: Konsolenanlagefläche
- 511: Positionsvorsprung
- 54: Lagerstelle
- 541: Lagerstellenbegrenzungsfläche
- 58: erste seitliche Stirnfläche
- 581: Führungsvorsprung
- 59: zweite seitliche Stirnfläche
- 591: Führungsausnehmung
- 60: kurvenaußenseitiges Förderstreckenlagerelement
- 70: Lagerblock

## Patentansprüche

1. Kurvenrollenförderer (1) mit einem Förderrahmen (10) und einer Mehrzahl von Förderrollen (20), die an dem Förderrahmen (10) drehbar gelagert sind, wobei der Kurvenrollenförderer (1) ein Antriebssystem (30) mit einem Antriebsriemen (31) mit einem runden Querschnitt aufweist, **dadurch gekennzeichnet, dass** mehrere Förderrollen (20) schwimmend auf dem Antriebsriemen (31) aufliegen und dass der Förderrahmen (10) des Kurvenrollenförderers (1) ein entlang einer Kreislinie verlaufendes Innenprofil und eine Vielzahl von an dem Innenprofil befestigten Förderstreckenlagerelementen (50) aufweist, die jeweils zur Bildung einer Lagerstelle (54) ein Langloch aufweisen, in dem ein Achsende der Förderrolle (20) aufgenommen ist.

2. Kurvenrollenförderer (1) nach Anspruch 1, wobei jedes der Förderstreckenlagerelemente (50) den jeweils benachbarten Förderstreckenlagerelementen (50) zugewandte Stirnflächen aufweist, wobei eine erste seitliche Stirnfläche (58) einen Führungsvorsprung (581) und eine zweite seitliche Stirnfläche (59) eine korrespondierende Führungsausnehmung (591) aufweist, wobei die Führungsvorsprünge (581) der Förderstreckenlagerelemente (50) jeweils in Führungsausnehmungen (591) der benachbarten Förderstreckenlagerelemente (50) eingreifen und derart gestaltet sind, dass ein Verkippen der Förderstreckenlagerelemente (50) zueinander verhindert wird.

3. Kurvenrollenförderer (1) nach Anspruch 1 oder 2, wobei der Kurvenrollenförderer (1) ferner ein an dem Innenprofil des Förderrahmens (10)angebrachtes konsolenartiges Befestigungselement (40) aufweist, das als längliches Blechbiegeteil ausgeführt ist, und das zur Befestigung mehrerer der Vielzahl von Förderstreckenlagerelementen (50) dient.

4. Kurvenrollenförderer (1) nach Anspruch 3, bei dem das konsolenartige Befestigungselement (40) eine Vielzahl von Positionsausnehmungen (45) aufweist, in die korrespondierende Positionsvorsprünge (511) der Förderstreckenlagerelemente (50) eingreifen, so dass die Positionen der Förderstreckenlagerelemente (50) entlang des Innenprofils in Richtung der Kreislinie definiert festgelegt sind.

5. Kurvenrollenförderer (1) nach einem der vorigen Ansprüche, wobei der Antriebsriemen (31) auf der den Förderrollen (20) abgewandten Seite auf einer Vielzahl von Tragrollen (32) aufliegt und wobei der Antriebsriemen (31) kurveninnenseitig durch eine Vielzahl von Stützrollen (33) abgestützt wird, so dass der Antriebsriemen (31) kurveninnenseitig entlang einer der Förderkurve folgenden Polygonkurve verläuft.

6. Kurvenrollenförderer (1) nach Anspruch 5, bei dem die Tragrollen (32) und/ oder die Stützrollen (33) an dem Befestigungselement (40) befestigt sind.

7. Kurvenrollenförderer (1) nach Anspruch 6, wobei das Verhältnis zwischen der Anzahl der angetriebenen Förderrollen F und der Anzahl der Stützrollen S der Beziehung 0,5 ≤ F/S ≤ 4 entspricht.

8. Kurvenrollenförderer (1) nach Anspruch 6 oder 7, wobei die Rotationsachsen der Stützrollen (33) jeweils einen senkrechten oder in Richtung der Kurvenaußenseite geneigten Verlauf aufweisen.

9. Kurvenrollenförderer (1) nach einem der Ansprüche 6 bis 8, wobei die Stützrollen (33) und/oder die Tragrollen (32) als Rollen mit kreiszylindrischen oder kreiskegelförmigen Oberflächen ausgeführt sind.

10. Kurvenrollenförderer (1) nach einem der vorigen Ansprüche, wobei der Kurvenrollenförderer (1) ferner zumindest eine Umlenkrolle (36) mit konkaver Auflagefläche aufweist.

11. Kurvenrollenförderer (1) nach Anspruch 10, wobei der Kurvenrollenförderer (1) ferner eine zweite Umlenkrolle (362) aufweist, die als Antriebsrolle (37) ausgebildet ist.

12. Kurvenrollenförderer (1) nach Anspruch 10 oder 11, wobei der Kurvenrollenförderer (1) ferner eine Untertrumumlenkrolle (39) aufweist, welche derart angeordnet ist, dass ein erster Teil des Untertrums (312), der von der ersten Umlenkrolle (361) kommend zur Untertrumumlenkrolle (39) führt, entlang einer Geraden verläuft, die in einer Ebene liegt, die senkrecht zur Rotationsachse der ersten Umlenkrolle (361) steht und durch den Antriebsriemen (31) im Bereich der ersten Umlenkrolle (361) verläuft.

13. Kurvenrollenförderer (1) nach einem der Ansprüche 1 bis 9, wobei der Kurvenrollenförderer (1) eine erste und eine zweite antriebslose Umlenkrolle (361, 362) aufweist, sowie eine im Bereich des Untertrums (312) angeordnete Antriebsrolle (37).

14. Kurvenrollenförderer (1) nach Anspruch 13, der zumindest eine Untertrumumlenkrolle (39) aufweist, die im Bereich des Untertrums (312) derart angeordnet ist, dass das Untertrum (312) die Antriebsrolle (37) um zumindest 180° umschlingt.

15. Kurvenrollenförderer (1) nach einem vorigen Ansprüche, bei dem die Förderrollen (20) jeweils zumindest eine Achse (23), zumindest ein konisches Mantelelement (24) und eine Antriebshülse (25) aufweisen,
wobei das zumindest eine konische Mantelelement (24) und die Antriebshülse (25) drehbar um die zumindest eine Achse (23) gelagert sind, wobei die Antriebshülse (25) zur Herstellung eines Antriebskontakts auf dem Antriebsriemen (31) aufliegt und drehmomementenbehaftet relativ zu dem konischen Mantelelement (24) verdrehbar ist.

## Claims

1. A curved roller conveyor (1) with a conveyor frame (10) and a plurality of conveyor rollers (20) rotatably supported on the conveyor frame (10), wherein the curved conveyor (1) has a drive system (30) with a drive belt (31) having a round cross-section, **characterized in that** several conveyor rollers (20) rest on the drive belt (31) in a floating manner and that the conveyor frame (10) of the curved roller conveyor (1) has an inner profile extending along a circular line and a plurality of conveyor section bearing elements (50) fixed on the inner profile, which each have an elongated hole to form a bearing site (54), in which an axle end of the conveyor roller (20) is received.

2. The curved roller conveyor (1) according to claim 1, wherein each of the conveyor section bearing elements (50) has end faces facing the respectively neighboring conveyor section bearing elements (50), wherein a first lateral end face (58) has a guiding protrusion (581) and a second lateral end face (59) has a corresponding guiding recess (591), wherein the guiding protrusions (581) of the conveyor section bearing elements (50) each engage guiding recesses (591) of the neighboring conveyor section bearing elements (50) and are configured such that tilting of the conveyor section bearing elements (50) with respect to each other is prevented.

3. The curved roller conveyor (1) according to claim 1 or 2, wherein the curved roller conveyor (1) further has a console-like fixing element (40) applied to the inner profile of the conveyor frame (10), said console-like fixing element (40) being formed as an elongated bent sheet metal part and serving to fix several of the plurality of conveyor section bearing elements (50).

4. The curved roller conveyor (1) according to claim 3, in which the console-like fixing element (40) has a plurality of position recesses (45) in which the corresponding position protrusions (511) of the conveyor section bearing elements (50) engage, so that the positions of the conveyor section bearing elements (50) along the inner profile toward the circular line are set in a defined manner.

5. The curved roller conveyor (1) according to one of the preceding claims, wherein the drive belt (31) rests on a plurality of carrier rollers (32) on the side opposite to the conveyor rollers (20), and wherein the drive belt (31) is supported by a plurality of support rollers (33) on the curve inner side, so that on the curve inner side the drive belt runs along a polygon curve following the conveying curve.

6. The curved roller conveyor (1) according to claim 5, in which the carrier rollers (32) and/or the support rollers (33) are fixed to the fixing element (40).

7. The curved roller conveyor (1) according to claim 6, wherein the ratio between the number of driven conveyor rollers F and the number of support rollers S corresponds to the relation 0.5 ≤ F/S ≤ 4.

8. The curved roller conveyor (1) according to claim 6 or 7, wherein the rotation axes of the support rollers (33) each have a vertical course or a course inclined toward the curve outer side.

9. The curved roller conveyor (1) according to one of claims 6 to 8, wherein the support rollers (33) and/or the carrier rollers (32) are configured as rollers having circular cylindrical or circular cone-shaped surfaces.

10. The curved roller conveyor (1) according to one of the preceding claims, wherein the curved roller conveyor (1) further has at least one idler pulley (36) with a concave resting surface.

11. The curved roller conveyor (1) according to claim 10, wherein the curved roller conveyor (1) further has a second idler pulley (362), which is formed as a driving roller (37).

12. The curved roller conveyor (1) according to one of claims 10 or 11, wherein the curved roller conveyor (1) further has a lower strand idler pulley (39) arranged such that a first part of the lower strand (312), which coming from the first idler pulley (361) leads to the lower strand idler pulley (39), runs along a straight line being in a plane that is perpendicular to the rotation axis of the first idler pulley (361) and that passes through the drive belt (31) in the area of the first idler pulley (361).

13. The curved roller conveyor (1) according to one of claims 1 to 9, wherein the curved roller conveyor (1) has a first and a second driveless idler pulley (361, 362) as well as a driving roller (37) arranged in the area of the lower strand (312).

14. The curved roller conveyor (1) according to claim 13, which has at least one lower strand idler pulley (39) arranged in the area of the lower strand (312) such that the lower strand (312) wraps around the driving roller (37) by at least 180°.

15. The curved roller conveyor (1) according to one of the preceding claims, in which the conveyor rollers (20) each have at least one axle (23), at least one conical casing element (24), and a drive sleeve (25),
wherein the at least one conical casing element (24) and the drive sleeve (25) are rotatably supported about the at least one axle (23),
wherein the drive sleeve (25) rests on the drive belt (31) to establish a drive contact and can be rotated relative to the conical casing element (24) with torque.

## Revendications

1. Transporteur à rouleaux de guidage (1) avec un châssis de transport (10) et une pluralité de rouleaux de transport (20) qui sont logés à rotation sur le châssis de transport (10), dans lequel le transporteur à rouleaux de guidage (1) présente un système d'entraînement (30) avec une courroie d'entraînement (31) avec une section transversale ronde, **caractérisé en ce que** plusieurs rouleaux de transport (20) reposent de manière flottante sur la courroie d'entraînement (31) et que le châssis de transport (10) du transporteur à rouleaux de guidage (1) présente un profil interne s'étendant le long d'une ligne circulaire et une pluralité d'éléments de palier de voie de transport (50) fixés au profil interne qui présentent chacun un trou oblong dans lequel une extrémité axiale du rouleau de transport (20) est reçue pour la formation d'un point d'appui (54).

2. Transporteur à rouleaux de guidage (1) selon la revendication 1, dans lequel chacun des éléments de palier de voie de transport (50) présente des faces frontales tournées vers les éléments de palier de voie de transport respectivement voisins (50), dans lequel une première face frontale latérale (58) présente une saillie de guidage (581) et une seconde face frontale latérale (59) présente un évidement de guidage correspondant (591), dans lequel les saillies de guidage (581) des éléments de palier de voie de transport (50) s'engrènent chacune dans des évidements de guidage (591) des éléments de palier de voie de transport voisins (50) et sont configurées de telle sorte qu'un basculement des éléments de palier de voie de transport (50) les uns vers les autres est empêché.

3. Transporteur à rouleaux de guidage (1) selon la revendication 1 ou 2, dans lequel le transporteur à rouleaux de guidage (1) présente en outre un élément de fixation de type console (40), monté sur le profil interne du châssis de transport (10) qui est réalisé en tant que pièce pliée en tôle longitudinale et qui sert à la fixation de plusieurs de la pluralité d'éléments de palier de voie de transport (50).

4. Transporteur à rouleaux de guidage (1) selon la revendication 3, dans lequel l'élément de fixation de type console (40) présente une pluralité d'évidements de position (45) dans lesquels des saillies de position correspondantes (511) des éléments de palier de voie de transport (50) s'engrènent de sorte que les positions des éléments de palier de voie de transport (50) sont fixées de manière définie le long du profil interne en direction de la ligne circulaire.

5. Transporteur à rouleaux de guidage (1) selon une des revendications précédentes, dans lequel la courroie d'entraînement (31) repose du côté détourné des rouleaux de transport (20) sur une pluralité de rouleaux porteurs (32) et dans lequel la courroie d'entraînement (31) est soutenue du côté interne de la courbe par une pluralité de rouleaux d'appui (33) de sorte que la courroie d'entraînement (31) s'étend du côté interne de la courbe le long d'une courbe polygonale suivant la courbe de transport.

6. Transporteur à rouleaux de guidage (1) selon la revendication 5, dans lequel les rouleaux porteurs (32) et/ou les rouleaux d'appui (33) sont fixés sur l'élément de fixation (40).

7. Transporteur à rouleaux de guidage (1) selon la revendication 6, dans lequel le rapport entre le nombre de rouleaux de transport entraînés F et le nombre de rouleaux d'appui S correspond à la relation 0,5 ≤ F/S ≤ 4.

8. Transporteur à rouleaux de guidage (1) selon la revendication 6 ou 7, dans lequel les axes de rotation des rouleaux d'appui (33) présentent chacun une allure perpendiculaire ou inclinée en direction du côté externe de la courbe.

9. Transporteur à rouleaux de guidage (1) selon une des revendications 6 à 8, dans lequel les rouleaux d'appui (33) et/ou les rouleaux porteurs (32) sont réalisés en tant que rouleaux avec des surfaces cylindriques circulaires ou en forme de cône de révolution.

10. Transporteur à rouleaux de guidage (1) selon une des revendications précédentes, dans lequel le transporteur à rouleaux de guidage (1) présente en outre au moins un rouleau de renvoi (36) avec une face d'appui concave.

11. Transporteur à rouleaux de guidage (1) selon la revendication 10, dans lequel le transporteur à rouleaux de guidage (1) présente en outre un second rouleau de renvoi (362) qui est réalisé en tant que rouleau d'entraînement (37).

12. Transporteur à rouleaux de guidage (1) selon la revendication 10 ou 11, dans lequel le transporteur à rouleaux de guidage (1) présente en outre un rouleau de renvoi de brin inférieur (39) qui est disposé de telle sorte qu'une première partie du brin inférieur (312) qui conduit au rouleau de renvoi de brin inférieur (39) en venant du premier rouleau de renvoi (361) s'étend le long d'une droite qui se situe dans un plan qui se situe perpendiculairement à l'axe de rotation du premier rouleau de renvoi (361) et s'étend à travers la courroie d'entraînement (31) dans la région du premier rouleau de renvoi (361).

13. Transporteur à rouleaux de guidage (1) selon une des revendications 1 à 9, dans lequel le transporteur à rouleaux de guidage (1) présente un premier et un second rouleau de renvoi sans entraînement (361, 362), ainsi qu'un rouleau d'entraînement (37) disposé dans la région du brin inférieur (312).

14. Transporteur à rouleaux de guidage (1) selon la revendication 13, qui présente au moins un rouleau de renvoi de brin inférieur (39) qui est disposé dans la région du brin inférieur (312) de telle sorte que le brin inférieur (312) enserre le rouleau d'entraînement (37) d'au moins 180°.

15. Transporteur à rouleaux de guidage (1) selon une des revendications précédentes, dans lequel les rouleaux de transport (20) présentent chacun au moins un essieu (23), au moins un élément d'enveloppe conique (24) et un manchon d'entraînement (25), dans lequel l'au moins un élément d'enveloppe conique (24) et le manchon d'entraînement (25) sont logés à rotation autour de l'au moins un essieu (23), dans lequel le manchon d'entraînement (25) repose sur la courroie d'entraînement (31) pour la réalisation d'un contact d'entraînement et peut tourner de manière conditionnée par le couple de rotation par rapport à l'élément d'enveloppe conique (24).
